# EUROPEAN PATENT APPLICATION

(11) **EP 2 068 531 A1**
(43) Date of publication of application: **10.06.2009**
(21) Application number: 08156669.7
(22) Date of filing: 21.05.2008
(51) Int. Cl.: H04L 29/06

(54) **IP-based integrated customized broadcast service system and method**

(30) Priority: 06.12.2007 KR 20070126370
(71) Applicant: Electronics and Telecommunications Research Institute, Yuseong-Gu Taejon (KR)
(72) Inventor: Lee, Sung Yong, Wonju-city, Kangwon-do (KR); Kim, Jae Hoon, Jeonju-city (KR); Song, Ho Young, Daejeon-city (KR); Kim, Bong Tae, Daejeon-city (KR)
(74) Representative: Betten & Resch

(57) **Abstract**

An Internet protocol (IP)-based integrated customized broadcast service system and method are provided. The IP-based integrated customized broadcast service system includes: a subscriber schedule table providing server generating a subscriber schedule table matching with a time when a user desires to be provided with a broadcast program or IP-based content; and a broadcast server transmitting the broadcast program to the user who desires to be provided with the broadcast program or converting the IP-based content to a broadcast service format that can be watched by the user and transmitting the converted IP-based content to the user who desires to be provided with the IP-based content according to the subscriber schedule table. Accordingly, video on demand (VoD) content, user created content (UCC), and proteur created content (PCC) can be used for broadcasting, so that a variety of broadcast programs can be configured.

## Description

### CROSS-REFERENCE TO RELATED PATENT APPLICATION

This application claims the priority of Korean Patent Application No. 10-2007-0126370, filed on December 6, 2007, in the Korean Intellectual Property Office, the disclosure of which is incorporated herein in its entirety by reference.

### BACKGROUND OF THE INVENTION

### 1. Field of the Invention

The present invention relates to an Internet protocol (IP)-based integrated customized broadcast service system and method, and more particularly, to an IP-based integrated customized broadcast service system and method, which are capable of providing to a user various broadcast contents stored in a video on demand (VoD) server, a user created content (UCC) server, or a proteur created content (PCC) server in an IP-based customized broadcast service system together with existing terrestrial broadcast, cable broadcast, satellite broadcast contents and contents stored in a networked-private video recorder (n-PVR) server.

### 2. Description of the Related Art

Conventionally, in IP-based customized broadcast service technology, a user schedules a desired broadcasting time of only terrestrial broadcast, cable broadcast, or satellite broadcast contents transmitted through an n-PVR server or an IP network in order to receive the broadcast contents (refer to Korean Patent Application Publication No. 2006-0070298, titled "Customized Read-Time Internet Broadcasting System and Method, published on June 23, 2006.06.23). In order to promote the service, an integrated customized broadcast service capable of supporting various contents is needed.

In addition, in US Patent Publication No. US2007/0124769 A1 (titled, Personal Broadcast Channels, published on March 31, 2007), a personal broadcast schedule table is configured by using real-time broadcast contents, contents stored in an n-PVR apparatus, Web pages, a music broadcast, or the like. According to the invention disclosed in US Patent Publication No. US2007/0124769 A1, various contents can be configured in comparison with the invention disclosed in Korean Patent Application Publication No. 2006-0070298. However, contents suitable for a video broadcasting service are needed.

In the conventional IP-based customized broadcast service, there is a problem in that available broadcast contents are limited to personal contents stored in the n-PVR server and the terrestrial broadcast, cable broadcast, and satellite broadcast contents.

### SUMMARY OF THE INVENTION

The present invention provides an Internet protocol (IP)-based customized broadcast service system and a method capable of providing to a user various IP-based contents including video on demand (VoD) content, user created content (UCC), and proteur created content (PCC).

The present invention also provides an IP-based customized broadcast service system and a method capable of recommending broadcast contents to a user based on information of contents that the user selects to configure customized broadcast channels.

According to an aspect of the present invention, there is provided an Internet protocol (IP)-based integrated customized broadcast service system comprising: a subscriber schedule table providing server generating a subscriber schedule table matching with a time when a user desires to be provided with a broadcast program or IP-based content; and a broadcast server transmitting the broadcast program to the user who desires to be provided with the broadcast program or converting the IP-based content into a broadcast service format that can be watched by the user and transmitting the converted IP-based content to the user who desires to be provided with the IP-based content according to the subscriber schedule table.

In the aspect of the present invention, the broadcast program may include a terrestrial broadcast program, a cable broadcast program, and a satellite broadcast program, and wherein the IP-based content includes VoD (video on demand) content, UCC (user created content), and PCC (proteur created content).

The IP-based integrated customized broadcast service system may further comprise: a broadcast program provider receiving the broadcast program and providing the broadcast program to the broadcast server; and a content server storing the IP-based content and providing the IP-based content to the broadcast server.

The IP-based integrated customized broadcast service system may further comprise a user content provider storing a broadcast program or IP-based content, which is selected by the user, and providing the broadcast program or the IP-based content to the broadcast server.

The IP-based integrated customized broadcast service system may further comprise a personal history management server analyzing a viewing history of the user who viewed the broadcast program or the IP-based content to recommend the broadcast program or the IP-based content matching with a viewing preference of the user so that the subscriber schedule table providing server can generate the subscriber schedule table.

The broadcast server may comprise: an input stream processor receiving the broadcast program; a broker converting the IP-based content to a broadcast service format that can be viewed by the user; a subscriber schedule table connector requesting the input stream processor or the broker for the broadcast program or the IP-based content according to the subscriber schedule table; and an output stream processor providing the broadcast program received from the input stream processor.

The broadcast server may comprise: an input stream processor receiving the broadcast program and converting the IP-based content to a broadcast service format that can be viewed by the user; a broker requesting the input stream processor for the IP-based content requested by the user; a subscriber schedule table connector requesting the input stream processor or the broker for the broadcast program or the IP-based content according to the subscriber schedule table; and an output stream processor providing the broadcast program received from the input stream processor or providing the converted IP-based content.

The subscriber schedule table providing server may provide to the user an EPG (electronic program guide) for the broadcast program, a user selected program or content of an n-PVR (networked-private video recorder) list, an IP-based content list, and a recommended content list provided from the personal history management server so as to generate the subscriber schedule table.

According to another aspect of the present invention, there is provided an IP-based integrated customized broadcast service method comprising: generating a subscriber schedule table matching with a time when a user desires to be provided with a broadcast program or IP-based content based on an EPG (electronic program guide) for the broadcast program, an IP-based content list, and a recommended content list matching with a viewing history of the user; and transmitting the broadcast program to the user or converting the IP-based content to a broadcast service format that can be viewed by the user and transmitting the converted IP-based content to the user according to the subscriber schedule table.

### BRIEF DESCRIPTION OF THE DRAWINGS

The above and other features and advantages of the present invention will become more apparent by describing in detail exemplary embodiments thereof with reference to the attached drawings in which:
FIG. 1 is a view illustrating a configuration of an Internet protocol (IP)-based integrated customized broadcast service system according to an embodiment of the present invention;
FIG. 2 is a view illustrating an internal configuration of a broadcast server according to an embodiment of the present invention;
FIGS. 3A and 3B are views illustrating operations of a broker according to an embodiment of the present invention;
FIG. 4 is a view illustrating a configuration of an electronic program guide (EPG) for generating a subscriber schedule table according to an embodiment of the present invention;
FIG. 5 is a view illustrating a subscriber schedule table according to an embodiment of the present invention; and
FIG. 6 is a flowchart illustrating an IP-based integrated customized broadcast service method according to an embodiment of the present invention.

### DETAILED DESCRIPTION OF THE INVENTION

Hereinafter, the present invention will be described in detail by explaining exemplary embodiments of the invention with reference to the accompanying drawings.

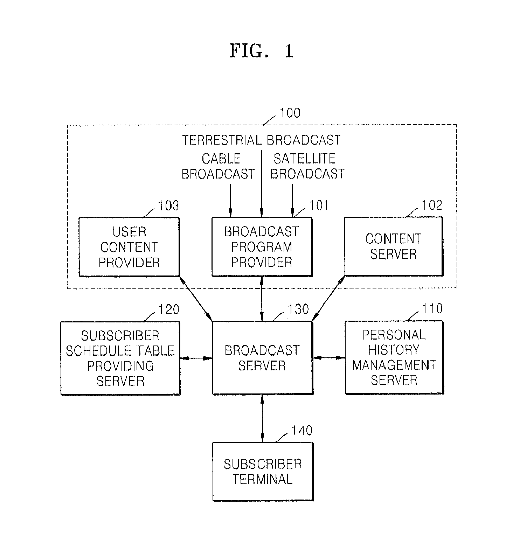

FIG. 1 is a view illustrating a configuration of an Internet protocol (IP)-based integrated customized broadcast service system according to an embodiment of the present invention. Referring to FIG. 1, the IP-based integrated customized broadcast service system includes a content provider 100, a personal history management server 110, a subscriber schedule table providing server 120, and a broadcast server 130.

The content provider 100 includes a broadcast program provider 101, a content server 102, and a user content provider 103. The broadcast program provider 101 provides a terrestrial broadcast, a satellite broadcast, and a cable broadcast. The content server 102 provides content created by amateurs or proteurs (a proteur refers to a combination of "professional" and "amateur"). The user content provider 103 stores broadcast content of users.

The personal history management server 110 stores information regarding broadcast content according to the viewing history of a user so as to recommend content suitable for the user based on his or her history.

The subscriber schedule table providing server 120 schedules a personal broadcast program to generate a subscriber schedule table for each user.

The broadcast server 130 provides a broadcast program (or broadcast content) to the subscriber (subscriber terminal 140).

The subscriber of the customized broadcast service generates a personal channel schedule table through an electronic program guide (EPG) server. In this case, the subscriber can use contents stored in the terrestrial/cable/satellite broadcast program providers, a content server, or a user content provider.

In addition, recommended content matching with a preference of the user and content based on a personal channel scheduling history (viewing history) may be included in the channel schedule table. When the subscriber generates the channel schedule table, the broadcast server monitors the time according to the channel schedule table and provides the received content to the subscriber.

Now, operations of the IP-based integrated customized broadcast service system according to the present invention will be described in detail with reference to the accompanying drawings.

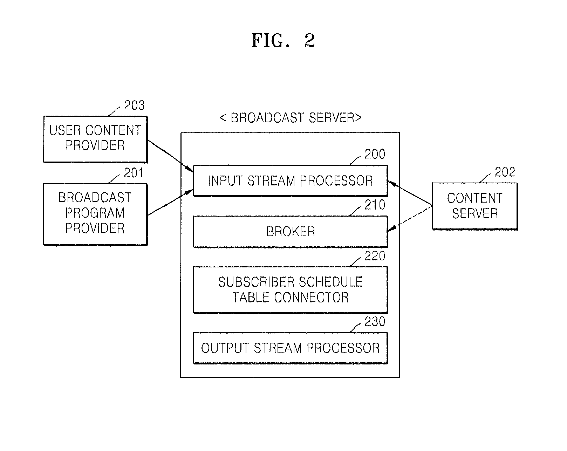

FIG. 2 is a view illustrating an internal configuration of the broadcast server according to an embodiment of the present invention. Referring to FIG. 2, the broadcast server includes an input stream processor 200, a broker 210, a subscriber schedule table connector 220, and an output stream processor 230.

The input stream processor 200 receives a broadcast program from terrestrial/cable/satellite broadcast program providers 201 or video on demand (VoD) content, content such as user created content (UCC) created by amateurs or proteurs, or content from a user content provider 203.

The broker 210 receives content in cooperation with a content transmitting scheme and operations of the content server 202.

The subscriber schedule table connector 220 controls broadcasting according to the personal channel schedule table configured by the subscriber.

The output stream processor 230 provides the broadcast to the subscriber (subscriber terminal).

If the subscriber configures the channels by using the channel schedule table providing server, content streams are input to the input stream processor 200 at the scheduled time, and the input content is connected to the output stream processor 230.

If the to-be-broadcasted content is VoD, UCC, or proteur created content (PCC) instead of content provided from the user content provider or the terrestrial/cable/satellite broadcast program providers, the broker 210 directly receives the content from the content server to provide the broadcast content to the subscriber.

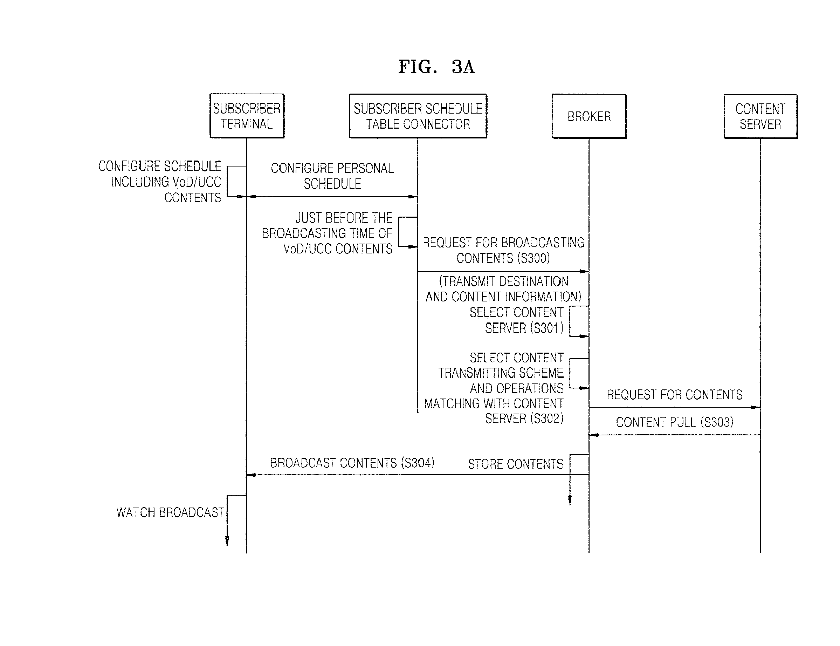

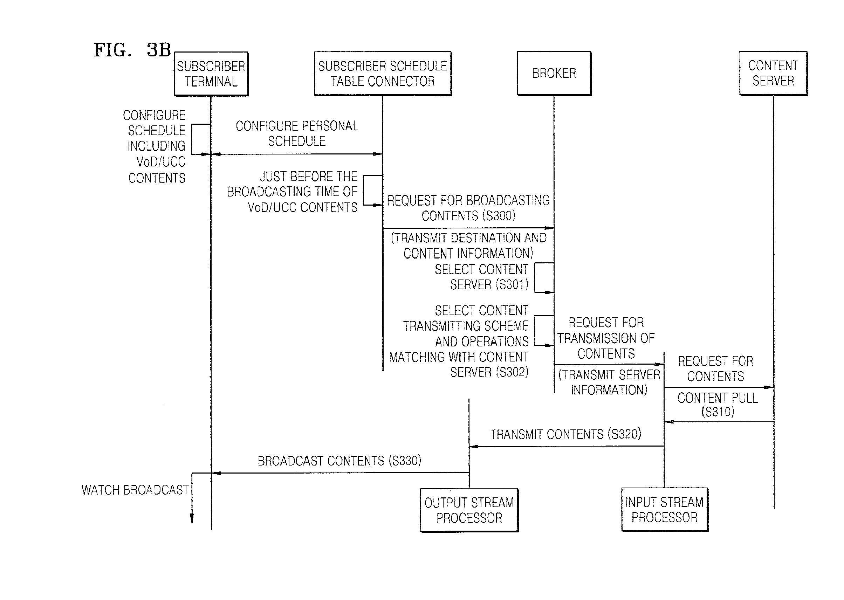

FIGS. 3A and 3B are views illustrating operations of the broker 210 according to an embodiment of the present invention.

The operations of the broker 210 can be classified into two cases.

FIG. 3A illustrate the general operation of the broker. If content requested by a user exists in a content server (S300), the broker selects the content server where the requested content exists (S301). The broker selects a content transmission scheme and operations suitable for the selected content server (S302). Next, the broker performs operations corresponding to the content transmission scheme in order to receive the content (S303). At the same time, the broker broadcasts the content to the subscriber (S304).

FIG. 3B illustrates operations of an output stream processor which broadcasts the content to the subscriber instead of the broker.

The operations 300 to 302 are similar to those of FIG. 3A. However, the broker accesses the content server and notifies the input stream processor of a method of receiving the content (S31 0). The input stream processor transfers the content received from the content server to the output stream processor (S320). In this case, the output stream processor finally broadcasts the content to the subscriber (S330).

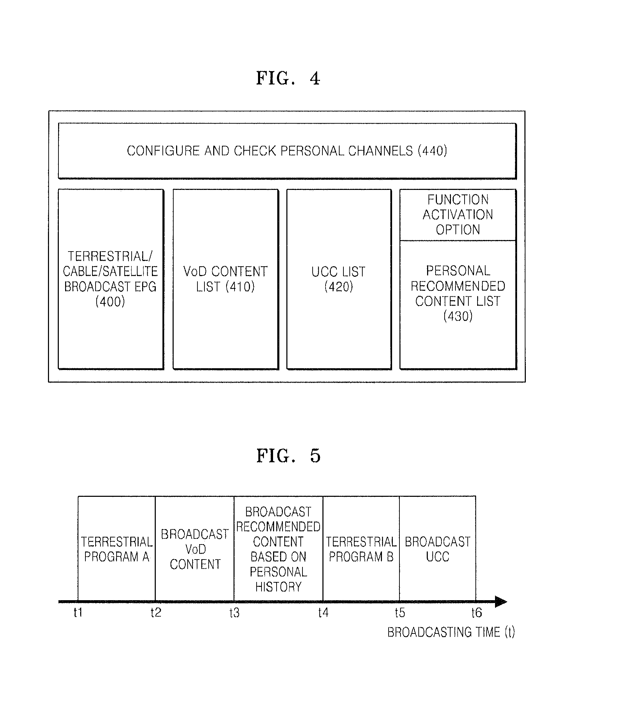

FIG. 4 is a view illustrating a configuration of the EPG for generating the subscriber schedule table according to an embodiment of the present invention.

The EPG includes an EPG 400 for terrestrial/cable/satellite broadcasts, a VoD content list 410, and a UCC content list 420. The user can configure personal channels for various broadcast contents (440).

In addition, a personal recommended content list 430 recommended by the system based on the history information of the broadcast contents selected by the user can be checked. This function is managed by the personal history management server and can be activated or deactivated according to the user's selection.

FIG. 5 is a view illustrating the subscriber schedule table according to an embodiment of the present invention.

The subscriber schedule table includes details of a broadcast time, and a broadcast program and content, which are to be broadcasted at the broadcast time.

The user can configure the channel schedule table of various contents corresponding to time. In addition, the channel schedule table may include contents that are recommended by the system.

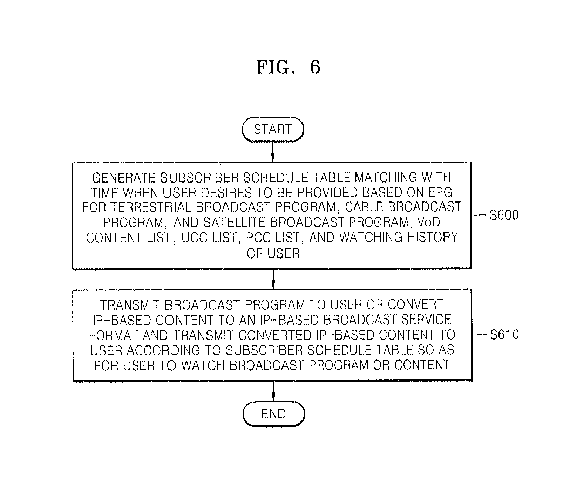

FIG. 6 is a flowchart illustrating an IP-based integrated customized broadcast service method according to an embodiment of the present invention.

An EPG for the terrestrial broadcast program, the cable broadcast program and the satellite broadcast program, a VoD content list, a UCC list, a PCC list, and a viewing history of a user are analyzed, and a subscriber schedule table matching with a time when the user desires to be provided with the broadcast programs or the IP-based content is generated based on the broadcast programs matching with a viewing preference of the user or a recommended content list (S600).

The broadcast program is transmitted to the user or the IP-based content is converted into an IP-based broadcast service format and the converted IP-based content is transmitted to the user according to the subscriber schedule table so that the user can watch the broadcast program or the content (S61 0).

According to the present invention, contents which a user uses to schedule channels can be extended to VoD content, UCC, PCC, and the like.

In addition, various contents can be recommended to the user based on a viewing preference of the user, so that various services can be provided in comparison with an existing service.

The invention can also be embodied as computer readable codes on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices, and carrier waves (such as data transmission through the Internet). The computer readable recording medium can also be distributed over network coupled computer systems so that the computer readable code is stored and executed in a distributed fashion.

While the present invention has been particularly shown and described with reference to exemplary embodiments thereof, it will be understood by those of ordinary skill in the art that various changes in form and details may be made therein without departing from the spirit and scope of the present invention as defined by the appended claims.

## Claims

1. An Internet protocol (IP)-based integrated customized broadcast service system comprising:
a subscriber schedule table providing server generating a subscriber schedule table matching with a time when a user desires to be provided with a broadcast program or IP-based content; and
a broadcast server transmitting the broadcast program to the user who desires to be provided with the broadcast program or converting the IP-based content into a broadcast service format that can be watched by the user and transmitting the converted IP-based content to the user who desires to be provided with the IP-based content according to the subscriber schedule table.

2. The IP-based integrated customized broadcast service system of claim 1,
wherein the broadcast program includes a terrestrial broadcast program, a cable broadcast program, and a satellite broadcast program, and
wherein the IP-based content includes VoD (video on demand) content, UCC (user created content), and PCC (proteur created content).

3. The IP-based integrated customized broadcast service system of claim 1 or 2, further comprising:
a broadcast program provider receiving the broadcast program and providing the broadcast program to the broadcast server; and
a content server storing the IP-based content and providing the IP-based content to the broadcast server.

4. The IP-based integrated customized broadcast service system of one of claims 1 to 3, further comprising a user content provider storing a broadcast program or IP-based content, which is selected by the user, and providing the broadcast program or the IP-based content to the broadcast server.

5. The IP-based integrated customized broadcast service system of one of claims 1 to 3, further comprising a personal history management server analyzing a viewing history of the user who viewed the broadcast program or the IP-based content to recommend the broadcast program or the IP-based content matching with a viewing preference of the user so that the subscriber schedule table providing server can generate the subscriber schedule table.

6. The IP-based integrated customized broadcast service system of one of claims 1 to 5, wherein the broadcast server comprises:
an input stream processor receiving the broadcast program;
a broker converting the IP-based content to a broadcast service format that can be viewed by the user;
a subscriber schedule table connector requesting the input stream processor or the broker for the broadcast program or the IP-based content according to the subscriber schedule table; and
an output stream processor providing the broadcast program received from the input stream processor.

7. The IP-based integrated customized broadcast service system of one of claims 1 to 6, wherein the broadcast server comprises:
an input stream processor receiving the broadcast program and converting the IP-based content to a broadcast service format that can be viewed by the user;
a broker requesting the input stream processor for the IP-based content requested by the user;
a subscriber schedule table connector requesting the input stream processor or the broker for the broadcast program or the IP-based content according to the subscriber schedule table; and
an output stream processor providing the broadcast program received from the input stream processor or providing the converted IP-based content.

8. The IP-based integrated customized broadcast service system of one of claims 1 to 7, wherein the subscriber schedule table providing server provides to the user an EPG (electronic program guide) for the broadcast program, a user selected program or content of an n-PVR (networked-private video recorder) list, an IP-based content list, and a recommended content list provided from the personal history management server so as to generate the subscriber schedule table.

9. An IP-based integrated customized broadcast service method comprising:
generating a subscriber schedule table matching with a time when a user desires to be provided with a broadcast program or IP-based content based on an EPG (electronic program guide) for the broadcast program, an IP-based content list, and a recommended content list matching with a viewing history of the user; and
transmitting the broadcast program to the user or converting the IP-based content to a broadcast service format that can be viewed by the user and transmitting the converted IP-based content to the user according to the subscriber schedule table.

10. The method of claim 1, further comprising the features as defined in one of claims 2 to 8.

11. A computer program comprising program code which when being executed on a computer makes said computer to carry out a method according to one of claims 9 to 10.
